(19)

Europäisches Patentamt

European Patent Office

Office européen des brevets

(11) **EP 4 446 578 A1**

(12) **EUROPEAN PATENT APPLICATION**

(43) Date of publication:
**16.10.2024 Bulletin 2024/42**

(21) Application number: **23167480.5**

(22) Date of filing: **12.04.2023**

(51) International Patent Classification (IPC):
***F03D 1/06*** (2006.01)

(52) Cooperative Patent Classification (CPC):
**F03D 1/0633;** F05B 2240/3042; F05B 2250/183;
F05B 2260/96

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S**
**7330 Brande (DK)**

(72) Inventors:
• **ASHEIM, Michael J.**
  **7100 Vejle (DK)**
• **FERRET GASCH, Oriol**
  **7100 Vejle (DK)**
• **OERLEMANS, Stefan**
  **7100 Vejle (DK)**

(74) Representative: **SGRE-Association
Siemens Energy Global GmbH & Co. KG
SE I IM P Intellectual Property
Siemenspromenade 9
91058 Erlangen (DE)**

(54) **TRAILING-EDGE ADD-ON**

(57)     The invention describes a wind turbine rotor blade add-on (1) comprising a plurality of serration teeth (10) arranged to extend outward from the trailing edge $(20_{TE})$ of the rotor blade (20), wherein a serration tooth (10) has an elongate shape defined by a base (10B) and two at least partially curved side edges (10S) converging at a tip (10T), and wherein the length of a serration tooth (10) from base (10B) to tip (10T) exceeds the width of the serration tooth (10) at its base (10B) by a factor of at least 6; a side edge (10S) of the serration tooth (10) includes a convex curved portion; and the closest distance (1G) between adjacent serration teeth (10) is at most 1 mm. The invention further describes a A wind turbine rotor blade (20) comprising a number of such add-ons (1) mounted to the trailing edge $(20_{TE})$ of the airfoil portion of the rotor blade (20).

FIG 2

EP 4 446 578 A1

**Description**

Acoustic noise emission is a critical parameter for permission to install wind turbines in various countries. A present-day wind turbine may have a very large aerodynamic rotor (with a diameter in the order of 160 m or more), and the long rotor blades are significant contributors to the acoustic noise emissions of the wind turbine. Acoustic noise from a wind turbine is primarily caused by its rotor blades, and arises when air moving over the pressure side and suction side of a rotor blade recombines beyond the trailing edge.

The essentially straight trailing edge of a rotor blade will scatter acoustic waves efficiently to observers in the vicinity of the wind turbine, who perceive the scattered acoustic waves as "trailing edge noise". This trailing edge noise arises when boundary layer turbulence crosses the straight trailing edge and scatters, giving rise to acoustic pressure fluctuations which can be carried over large distances, and which can lead to difficulties in meeting noise regulations at an immission point.

The trailing edge noise can be mitigated to some extent by attaching a "saw-tooth" serrated add-on to the trailing edge along part of the outboard region of the rotor blade. An established trailing-edge add-on design comprises a row of triangular "teeth" that act to reduce the radiation efficiency of noise generated at points along the blade span. The shape of a serration tooth of such a prior art add-on is triangular and is defined by a base and two straight sides that converge at a tip or apex of the triangle. This type of serrated trailing edge reduces radiation emission by several mechanisms: at low frequencies, the sizes of the corresponding turbulent eddies are large, and the serration appears as an intermediary between the solid surface of the airfoil and the wake, with the effect of blending the acoustic impedance (the ratio of acoustic pressure to the corresponding volume velocity through a surface, a solid surface having very high impedance and a fluid such as air having very low impedance) of the airfoil edge and reducing the scattering intensity; at higher frequencies, the serrations create an incidence angle between the convecting turbulence and the airfoil edge, which has the effect of reducing the radiation efficiency of the scattered acoustic waves; in a further mode, the serrations induce a destructive interference effect between noise scattered at the base of each serration and noise scattered along its straight sides. Such a "sawtooth" add-on will scatter first from the base of each triangular tooth, then along the straight edge of each triangular tooth, and finally at the apex or tip of each triangle. The base-to-tip time delay induces some destructive interference in the acoustic field. However, the noise-mitigation effects of known saw-tooth trailing-edge serrations are limited. Therefore, if further noise reduction is required in order to obtain permission to install a wind turbine, it may be necessary for the wind turbine operator to reduce the maximum aerodynamic rotor speed of the wind turbine. However, this comes at the cost of reduced annual energy production (AEP) of the wind turbine and is therefore an unsatisfactory solution.

It is therefore an object of the invention to provide a wind turbine rotor blade add-on with improved noise-mitigation performance.

This object is achieved by the claimed wind turbine rotor blade add-on and by the claimed wind turbine rotor blade.

Description

According to the invention, the rotor blade add-on comprises a plurality of serration teeth arranged to extend outward, i.e. in the downstream direction, from the trailing edge of the rotor blade. A serration tooth has an elongate shape defined by a base and two side edges converging at a tip.

Characteristics of the inventive add-on are: the length of a serration tooth from base to tip exceeds the width of the serration tooth by a factor of at least 6 (six); the side edges of each serration tooth exhibit a convex edge curvature; and the distance from the base of one serration tooth to the base of an adjacent serration tooth is at most 1 mm.

The geometry of a serration tooth can be defined by three points, namely the two outer points of its base and the point at which the side edges converge. These three points also define a smaller "underlying" triangle, i.e. a triangle with a smaller surface area that is essentially contained within the serration tooth. In the context of the invention, the convex edge of a serration tooth of the add-on lies outside the straight edges of the underlying triangle, as will become clear from the drawings.

The performance of an add-on shall be understood as its performance in the context of acoustic noise emissions, i.e. the effect of the add-on's shape and form on trailing edge noise. As explained above, trailing edge noise is acoustic noise caused by the behaviour of turbulence at and beyond the rotor blade's trailing edge. The inventive rotor blade add-on has been shown to result in a surprisingly significant reduction in such trailing edge acoustic noise. The performance of the inventive wind turbine rotor blade add-on has been shown (e.g. in wind tunnel tests) to exceed the performance of an equivalent add-on with "triangular" or saw-tooth serrations as known from the prior art.

For any given stream-wise serration tooth length (measured from the midpoint of a serration's base to its tip), maintaining a high aspect ratio of at least 6:1 for an add-on effectively reduces the spanwise width of any serration tooth (measured across its base), improving the potential for destructive interference of noise radiated along the edge of the serration tooth. The high aspect ratio of each serration tooth of the inventive add-on ensures that that also relatively small-scale turbulence is impacted by the acoustic impedance blending of the add-on, making the serration also effective at higher frequencies. The favourable shape of the serration teeth of the inventive add-on decreases the angle of incidence of turbulence convecting past the edges of the teeth, and ensures that turbulence is significantly correlated over the width of the serration tooth.

The convex edge curvature of the serration teeth and the very small gap between the outer corners of adjacent serration teeth optimize the noise mitigation. Suitable choice of geometrical parameters for the serration teeth can ensure that the turbulence scatters acoustic energy as inefficiently as possible, thus mitigating the noise observed at the relevant immission points. The curvature of the serration edge allows for a balanced combination of the noise mitigation mechanisms listed above - namely the blending of acoustic impedance, the incidence angle of turbulence crossing the edge, and the destructive interference of neighbouring source locations. The combination of these geometric features produces acoustic noise reduction at critical frequencies such as between 500 Hz and 1500 Hz.

The inventive wind turbine rotor blade has a root portion and an airfoil portion, and can have a length in excess of 80 m. The rotor blade further comprises at least one instance of the inventive add-on, mounted to the trailing edge of the airfoil portion of the rotor blade. A wind turbine generally has three rotor blades, and each can be equipped with essentially the same arrangement of add-on(s) along a section of its trailing edge.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the add-on comprises a mounting band or strip to facilitate a step of attaching the add-on to the trailing edge of a wind turbine rotor blade. A row of serration teeth extends in the downstream direction from this mounting band. The bottom edges of the serration tooth shall be assumed to lie along a continuous line, referred to herein as the baseline. The mounting band can serve to attach the add-on directly to the trailing edge of a wind turbine rotor blade. Alternatively, the mounting band can serve to attach the add-on to a further mounting means which in turn can be attached to a rotor blade trailing edge.

The inventive add-on can be manufactured in one piece to comprise a row of serration teeth as well as the mounting band. For example, the add-on can be manufactured using an injection moulding technique, a laser-cutting technique, a vacuum moulding technique, an additive manufacturing technique such as 3D printing, a subtractive manufacturing technique such as milling, a stamping technique, etc. The add-on can be made of a suitable material such as stiff and durable plastic (thermoplastic), reinforced composites, wood, vulcanized materials, metal or metal alloys, or combinations thereof, possibly with a surface coating.

The favourable performance of the inventive add-on is to some extent the result of the specific shape of the serration tooth. The side edge of a serration tooth exhibits convex curvature over at least some of its length between the base and tip of the serration tooth, i.e. a serration tooth is essentially "iron-shaped", having a shape similar to the shape of the ironing plate of a clothes iron.

The side edge of a serration tooth can comprise a curved portion and a straight portion, for example a straight portion commencing at the base and transitioning into a curved portion, which terminates at the tip. The point at which the curved portion transitions to the straight portion is preferably chosen so that the serration tooth has a convex curvature over most of its length. The serration may also, for example, include a concave portion, with an inflection point in the curvature of the edge between a convex or straight portion and the concave portion.

Alternatively, the side edge of a serration tooth is curved over its entire length. In such an embodiment, the side edge of a serration tooth preferably has the form of a conic arc or ogive. The conic arc may have the shape of a tangent ogive, i.e. a line commencing at the baseline and tangent to the side edge is perpendicular to the baseline (the side edge meets the baseline at an angle of 90°).

Equally, the conic arc may have the shape of a secant ogive i.e. a line commencing at the baseline and tangent to the side edge meets the baseline at an angle $\theta$ to the normal (the side edge meets the baseline at an angle less than 90°). In a particularly preferred embodiment of the invention, the side edge of an ogive-shaped serration tooth meets the baseline at an angle of at most 4.76° relative to the normal, more preferably at an angle of at most 2° relative to the normal.

The angle at which a side edge of an ogive-shaped serration tooth meets the baseline can be expressed in terms relating to the underlying triangle enclosed by the serration tooth, i.e. the triangle formed between the three outer points of the serration tooth. For example, the angle $\delta$ subtended between the long axis of the underlying triangle and its hypotenuse (the straight side edge) of the underlying triangle is expressed as

$$\delta = \tan^{-1}\frac{W}{2L} \qquad\qquad (1)$$

where W is the width of the triangle base, and L is measured from the midpoint of the triangle base to its apex. The angle θ at which a side edge of an ogive-shaped serration tooth meets the baseline is preferably less than two thirds (2/3) of the angle δ, more preferably less than one third (1/3) of the angle δ. The angle θ reduces to 0° in the case of a tangent ogive shape.

The general shape of a serration tooth of the inventive add-on can also be defined in terms of its aspect ratio. A serration tooth of the inventive add-on has a relatively high aspect ratio, i.e. its length is significantly longer than its width. The minimum aspect ratio for a serration tooth of the inventive add-on is 6:1, and can be as large as 12:1. The aspect ratio of a serration tooth of the inventive add-on can be expressed as

$$6 \leq \frac{L}{W} \leq 12 \qquad\qquad (2)$$

In other words, in a preferred embodiment of the invention, the length of a serration tooth exceeds the width of the serration tooth by a factor of at least six, and by at most twelve. Experiments and simulations have been carried out to identify suitable dimensions for the serration teeth of the inventive add-on. For example, it has been established that the length of a serration tooth from base to tip preferably should not be less than 30 mm and should not exceed 200 mm. Similarly, it has been established that the width of a serration tooth at its base preferably should not be less than 3 mm and should not exceed 33 mm.

The improvement in performance of the inventive add-on, i.e. the reduction in acoustic noise caused by the rotor blades, is a result of the advantageous shape described above (high aspect ratio and convex curvature along the side edges) and the narrow spacing between adjacent serration teeth of an add-on. Any two adjacent serration teeth are separated by a gap of at most 1 mm. This is the distance between an outer corner of one serration tooth and the outer corner of its neighbouring serration tooth. This distance is preferably at most 0.5 mm.

The serrations can be essentially flat, i.e. the thickness of a serration tooth can be essentially constant over its entire area. In a preferred embodiment of the invention, in order to increase the aerodynamic efficiency of the add-on and to improve its structural strength, the thickness of a serration tooth can decrease towards the edges, i.e. the thickest part of the serration tooth is towards the centre. In a preferred embodiment of the invention, the thickness of a serration tooth is at most 80 % of its width, for example a serration tooth with a width of 50 mm can have a thickness of 40 mm or less.

A serration tooth can be symmetrical about its longitudinal axis, e.g. this axis meets the baseline at a right angle and at the midpoint of the base. However, alternative shapes for a serration tooth are possible, for example the longitudinal axis of a serration tooth may meet the baseline at an angle to the normal and/or the longitudinal axis of a serration tooth may intersect the baseline at a point other than the midpoint.

The inventive add-on can be attached to a rotor blade so as to not impact the lift of the airfoil at its operating angle of attack. This can be referred to as the "zero-lift" position of that add-on, since the add-on essentially does not affect the lift of the airfoil in this position. Alternatively, in a further preferred embodiment of the invention, an add-on can be attached to the rotor blade at an angle relative to the zero-lift position, towards the pressure side of the airfoil, so that it also increases the lift force on the airfoil.

The inventive add-on can be mounted to a rotor blade along any suitable portion of its length. Since acoustic noise has been observed to arise primarily downwind of the outboard rotor blade portion, one or more add-ons are preferably mounted to the trailing edge within the outermost 30% of the rotor blade spanwise length. The add-ons of such an arrangement can be placed adjacent to each other or may be spaced apart, as appropriate.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Figure 1 shows an exemplary embodiment of the inventive add-on in place along the trailing edge of a wind turbine rotor blade;

Figures 2 - 7 show exemplary realisations of the inventive add-on;

Figure 8 shows a cross-section though an exemplary serrated tooth of the inventive add-on;

Figures 9 and 10 show possible modes of attachment of the inventive add-on to a wind turbine rotor blade;

Figure 11 shows a wind turbine with a number of rotor blades as shown in Figure 1;

Figure 12 shows a wind turbine rotor blade with a prior art add-on.

In the diagrams, like numbers refer to like objects throughout. Objects in the diagrams are not necessarily drawn to scale.

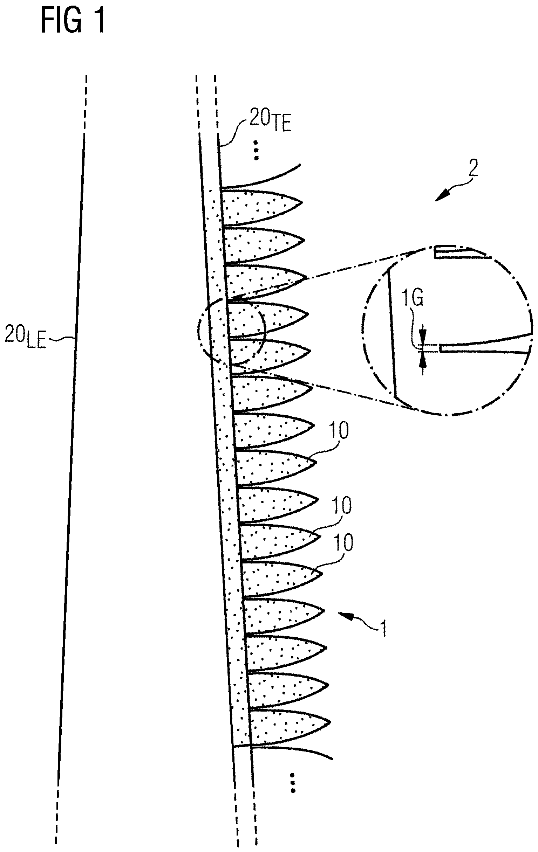

Figure 1 shows an exemplary embodiment of the inventive add-on 1, in place along the trailing edge $20_{TE}$ of a wind turbine rotor blade 20. Here, several add-ons 1 are mounted along the trailing edge $20_{TE}$ of the rotor blade 20. Each add-on 1 comprises a plurality of serration teeth 10 extending outward from an elongate strip 11 (used to attach the add-on 1 to the rotor blade). Unlike the sawtooth shape of a prior art add-on, a serration tooth 10 of the inventive add-on 1 has a shape that can be described as a "flatiron" shape, having a form similar to the bottom plate of a clothes iron, with a high aspect ratio of at least 6:1. The enlarged portion of the diagram shows that adjacent serration teeth 10 are separated by a small gap 1G no larger than 1 mm, preferably no larger than 0.5 mm. The combined effect of the high aspect ratio, the convex curvature along the side edges and the narrow gap 1G between adjacent serration teeth 10 is to significantly reduce trailing edge noise of a wind turbine. Experiments have shown a decrease of more than 3 dB at relevant frequencies in wind turbine noise perceived at an immission point.

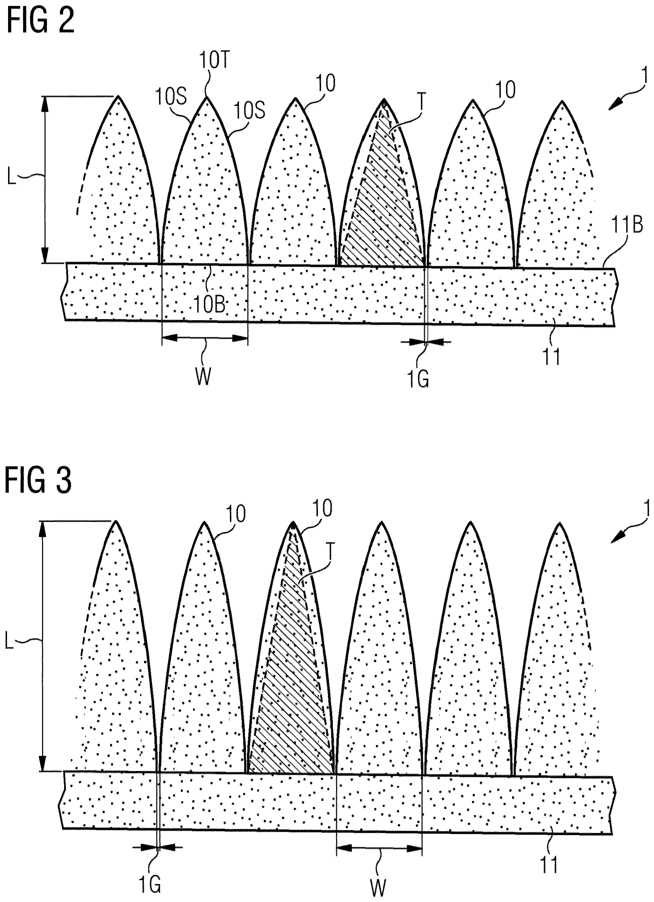

Figures 2 - 7 show possible geometries for the serration tooth 10 of an instance of the inventive add-on 1. Each serration tooth 10 is defined by two sides 10S extending from outer points of its bottom edge 10B or base and converging at its tip 10T. The base or "root" of a serration tooth can have any form, for example a straight line extending essentially parallel to the trailing edge of the airfoil. Equally, the base of a serration tooth can be curved or angular.

The serration tooth 10 extend outward from an elongate band 11 or mounting band, and the bottom edges 10B of the row of serration teeth 10 lie along a common baseline 11B. The baseline 11B essentially defines one long edge of the mounting band 11.

In Figure 2, a serration tooth 10 has a length L of 100 mm and a width W of 10 mm, so that the aspect ratio of a serration tooth 10 of this add-on 1 is 10:1. In Figure 3, a serration tooth 10 has a length of 140 mm and a width of 20 mm, so that the aspect ratio of a serration tooth 10 of this add-on 1 is 7:1. Each diagram also indicates a smaller underlying isosceles triangle T (broken line) contained within a serration tooth 10 and defined by the same three vertices. The convex side edge 10S of the serration tooth lies outside the straight side edge of the triangle T.

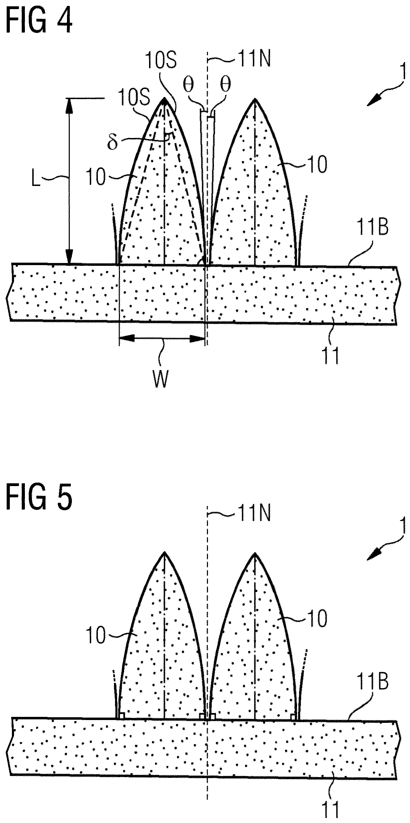

In Figure 4, a serration tooth 10 has the shape of a conic arch, in this case a secant ogive shape. In such an embodiment, the side edge 10S of the serration tooth 10 meets the baseline 11B at a non-zero angle to the normal 11N, whereby this angle $\theta$ is at most 4.76°. In the embodiment shown here, the angle $\theta$ is in the order of 1°.

As explained above, the angle at which a side edge of an ogive-shaped serration tooth 10 meets the baseline 11B can be expressed in terms relating to the geometry of an underlying triangle T enclosed by the serration tooth, i.e. a triangle T formed between the three outer points of the serration tooth 10. The angle $\delta$ subtended between the long axis of the serration tooth 10 and the hypotenuse (the straight side edge) of the underlying triangle T is given in equation (1) above, the angle $\theta$ at which a side edge of an ogive-shaped serration tooth meets the baseline is preferably less than 2/3 $\delta$, more preferably less than 1/3 $\delta$.

In Figure 5, a serration tooth 10 has the shape of a conic arch, in this case a tangent ogive shape. In such an embodiment, the side edge 10S of the serration tooth 10 meets the baseline 11B at a right angle, i.e. a tangent to the side edge 10S and originating at the baseline 11B is coincident with the normal 11N. Another way to describe this shape is that an angle $\theta$ subtended between the side edge 10S and the normal reduces to 0° at the point of intersection of the side edge with the baseline 11B.

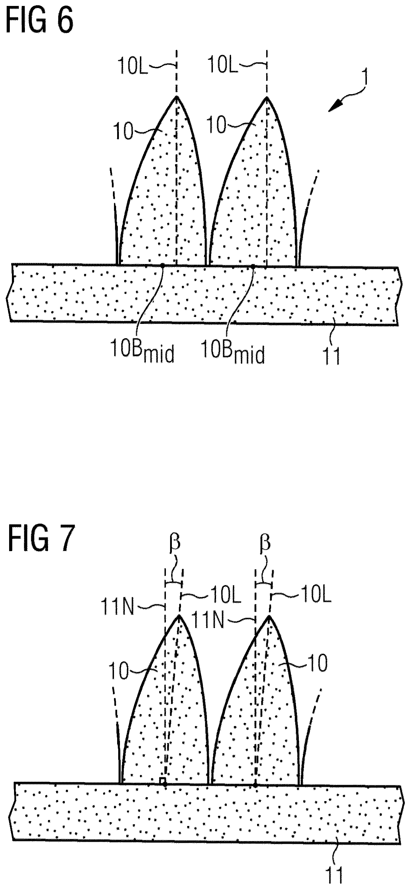

In the above diagrams, a serration tooth 10 of an add-on 1 is essentially symmetrical about its long axis 10L, i.e. the long axis 10L intersects the base 10B at its midpoint $10B_{mid}$. In Figures 1 - 5, the long axis 10L of a serration tooth 10 is perpendicular to the baseline 10B. In an alternative embodiment as shown in Figure 6, a serration tooth 10 can be asymmetrical if its long axis 10L intersects the base 10B at a point that is offset from the midpoint $10B_{mid}$. In a further alternative embodiment as shown in Figure 7, a serration tooth 10 can exhibit asymmetry if its long axis 10L intersects the baseline 11B at an angle $\beta$ that is offset from the normal (indicated by the broken line). The outer convex shapes of the side edges of the serration tooth 10 are adjusted accordingly.

In an alternative embodiment, neighboring serration teeth 10 of the inventive add-on 1 can differ as regards the parameters $\theta$, L, W and $\beta$, within the bounds described above.

In any of the embodiments shown in Figures 2 - 7, the gap between adjacent serration teeth 10 of an add-on 1 can be assumed to be at most 1 mm.

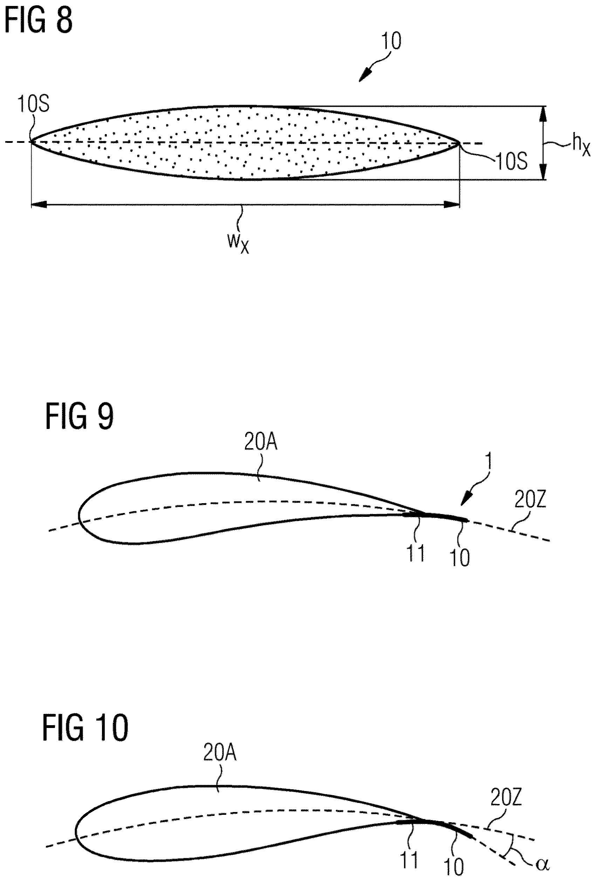

Figure 8 shows a cross-section through a serration tooth 10 of an embodiment of the inventive add-on 1. Here, the thickness of the serration tooth 10 decreases from a maximum thickness at the centre towards a minimum thickness along the side edges 10S. The diagram shows the thickness $h_x$ and width $w_x$ at some point along the length of the serration tooth 10. For example, a serration tooth 10 with a width of 10 mm at its base may have a maximum thickness of 3 mm at its centre, tapering towards 0.2 mm at the outer edges 10S. This ratio of width $w_x$ to height $h_x$ may be essentially constant along the length of the serration tooth 10. The cross-sectional shape of the serration tooth 10 can be essentially elliptical as shown here (the serration tooth has an essentially uninterrupted curved surface). Alternatively, the cross-sectional shape may be essentially polygonal (the serration tooth has several planar surfaces which meet at various edges).

Figures 9 and 10 shows alternative ways of mounting an add-on 1 to an airfoil 20A of a wind turbine rotor blade. In Figure 9, the add-on 1 is attached so that it is arranged essentially in the "zero-lift" position 20Z. When mounted in this manner, the add-on does not contribute to the lift force on the airfoil 20A. Alternatively, as shown in Figure 10, an add-on 1 can be attached to the rotor blade at an angle, inclined towards the pressure side of the airfoil 20A. Here, the add-on 1 is inclined at an angle of about 3° relative to the zero-lift position 20Z so that it can contribute to the lift force on the airfoil 20A.

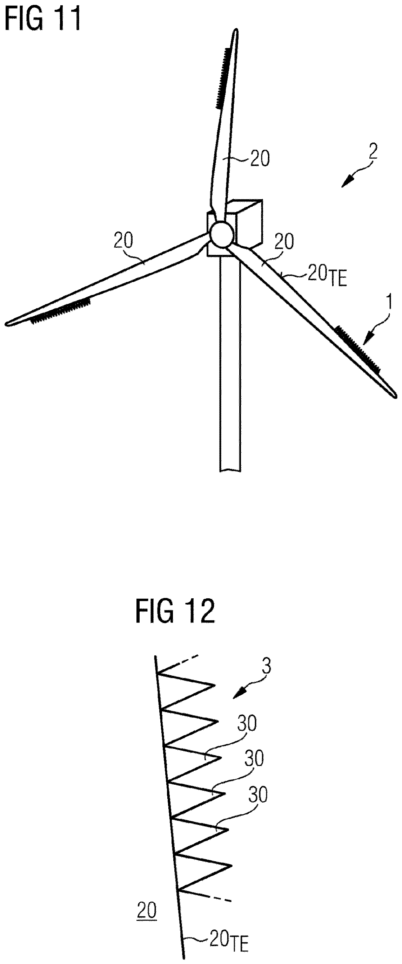

Figure 11 shows a wind turbine 2 with an aerodynamic rotor comprising three rotor blades 20. Each rotor blade 20 is equipped with an arrangement of one or more instances of the inventive add-on 1 along its trailing edge $20_{TE}$. The add-ons 1 are placed in the outboard region of a rotor blade 20 as shown here.

Figure 12 shows a wind turbine rotor blade with a prior art add-on 3. Here, the shape of each serration tooth 30 is triangular, i.e. each serration tooth 30 has the shape of an isosceles triangle. Adjacent serration teeth meet directly at the baseline, i.e. there is no gap between adjacent teeth. The aspect ratio of length to width of the serration tooth 30 of a prior art add-on 3 is generally no larger than 4:1. With these design aspects, the prior art add-on performs as explained in the introduction.

Although the present invention has been disclosed in the form of preferred embodiments and variations thereon, it will be understood that numerous additional modifications and variations could be made thereto without departing from the scope of the invention. For example, one or more add-ons can be incorporated during manufacture of a rotor blade. Of course, any existing wind turbine rotor blade can be upgraded by replacing existing "sawtooth" trailing edge add-ons by a suitable number of the inventive add-ons. Furthermore, while a rotor blade can be equipped with several identical add-ons, each with identical serration teeth, it is equally possible to equip a rotor blade with add-ons that have different serration teeth geometries while maintaining the favourably high aspect ratio, for example the serration teeth of the add-ons may vary in length or width while each having the same high aspect ratio. It shall be noted that a wind turbine rotor blade may also be equipped with one or more add-ons that include one or more serration teeth with shapes different to those described above.

For the sake of clarity, it is to be understood that the use of "a" or "an" throughout this application does not exclude a plurality, and "comprising" does not exclude other steps or elements.


**Claims**

1.    A wind turbine rotor blade add-on (1) comprising a plurality of serration teeth (10) arranged to extend outward from the trailing edge ($20_{TE}$) of the rotor blade (20), wherein a serration tooth (10) has an elongate shape defined by a base (10B) and two at least partially curved side edges (10S) converging at a tip (10T), and wherein

 - the length of a serration tooth (10) from base (10B) to tip (10T) exceeds the width of the serration tooth (10) at its base (10B) by a factor of at least 6;
 - a side edge (10S) of the serration tooth (10) includes a convex curved portion; and
 - the closest distance (1G) between adjacent serration teeth (10) is at most 1 mm.

2.    An add-on according to the preceding claim, wherein the length (L) of a serration tooth (10) exceeds the width (W) of the serration tooth (10) at its base (10B) by a factor of at most 12.

3.    An add-on according to any of the preceding claims, wherein the closest distance (1G) between adjacent serration teeth (10) is at most 1.0 mm, more preferably at most 0.5 mm.

4.    An add-on according to any of the preceding claims, wherein the side edge (10S) of a serration tooth (10) meets its base (10B) at an angle of at most 4.76° relative to the normal, more preferably at an angle of at most 2° relative to the normal.

5.    An add-on according to any of the preceding claims, wherein at least a portion of a side edge (10S) of a serration tooth (10) has the form of a conic arc.

6.    An add-on according to claim 5, wherein the conic arc is a secant ogive.

7.    An add-on according to claim 5, wherein the conic arc a tangent ogive.

8.    An add-on according to any of the preceding claims, wherein the ratio of thickness ($h_x$) to width ($w_x$) of a serration tooth (10) is at most 0.8.

9. An add-on according to any of the preceding claims, wherein a serration tooth (10) is symmetrical about a longitudinal axis (10L).

10. An add-on according to any of the preceding claims, comprising an elongate band (11) to facilitate mounting to a wind turbine rotor blade (20), and wherein the serration teeth (10) extend outward from the elongate band (11).

11. An add-on according to any of the preceding claims, manufactured as an injection-moulded part from a thermoplastic material.

12. A wind turbine rotor blade (20) comprising a root portion and an airfoil portion, and further comprising a number of add-ons (1) according to any of claims 1 to 11 mounted to the trailing edge ($20_{TE}$) of the airfoil portion of the rotor blade (20).

13. A wind turbine rotor blade according to the preceding claim, wherein an add-on (1) is mounted to the trailing edge ($20_{TE}$) within an outermost 30 % of the rotor blade span.

14. A wind turbine rotor blade according to claim 12 or claim 13, wherein an add-on (1) is inclined towards the pressure side of the airfoil (20A) at an angle ($\alpha$) of at least 0° relative to an airfoil zero-lift position (20Z).

15. A wind turbine (2) equipped with a number of rotor blades (20) according to any of claims 12 to 14.

FIG 1

$20_{TE}$

2

$20_{LE}$

1G

10

10

10

1

FIG 2

FIG 3

FIG 4

FIG 5

FIG 6

FIG 7

FIG 8

10

10S

10S

$h_X$

$w_X$

FIG 9

20A

1

20Z

11    10

FIG 10

20A

20Z

11    10

$\alpha$

# FIG 11

# FIG 12

Europäisches
Patentamt

European
Patent Office

Office européen
des brevets

# EUROPEAN SEARCH REPORT

Application Number

EP 23 16 7480

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2014/048437 A1 (VESTAS WIND SYS AS [DK]) 3 April 2014 (2014-04-03)<br>* page 2, line 36 – page 3, line 17 *<br>* page 9, line 32 – page 10, line 1 *<br>* page 10, line 6 – line 22 *<br>* page 11, line 2 – line 12 *<br>* page 18, line 32 – page 19, line 3 *<br>* page 19, line 28 – page 20, line 5 *<br>* figures 3,4; compounds 44, 88,82 *<br>----- | 1-15 | INV.<br>F03D1/06 |
| Y | US 5 533 865 A (DASSEN ANTONIUS G M [NL] ET AL) 9 July 1996 (1996-07-09)<br>* column 1, line 15 – line 25 *<br>* column 2, line 10 – line 21 *<br>* column 2, line 30 – line 36 *<br>* figure 8 *<br>----- | 1-3,5-15 | |
| Y | US 11 448 183 B2 (LM WIND POWER US TECH APS [DK]) 20 September 2022 (2022-09-20)<br>* column 2, line 17 – line 25 *<br>* column 6, line 14 – line 27 *<br>* column 11, line 42 – line 47 *<br>* figure 5; compound 20' *<br>----- | 1,4,13 | |
| A | WO 2014/207015 A1 (SIEMENS AG [DE]) 31 December 2014 (2014-12-31)<br>* page 1, line 5 – line 12 *<br>* page 7, line 21 – page 8, line 8 *<br>* page 14, line 5 – line 15 *<br>* figure 13; compound 43 *<br>* claim 1 *<br>----- | 1-15 | |

TECHNICAL FIELDS
SEARCHED      (IPC)

F03D

The present search report has been drawn up for all claims

| Place of search | Date of completion of the search | Examiner |
|---|---|---|
| The Hague | 27 September 2023 | Westermayer, Philipp |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 16 7480

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2023

| Patent document cited in search report | | Publication date | Patent family member(s) | | Publication date |
|---|---|---|---|---|---|
| WO 2014048437 | A1 | 03-04-2014 | NONE | | |
| US 5533865 | A | 09-07-1996 | CN | 1110368 A | 18-10-1995 |
| | | | EP | 0652367 A1 | 10-05-1995 |
| | | | FI | 944650 A | 05-05-1995 |
| | | | NL | 9301910 A | 01-06-1995 |
| | | | US | 5533865 A | 09-07-1996 |
| US 11448183 | B2 | 20-09-2022 | EP | 3406892 A1 | 28-11-2018 |
| | | | EP | 3631197 A1 | 08-04-2020 |
| | | | MA | 48932 A | 08-04-2020 |
| | | | US | 2020149507 A1 | 14-05-2020 |
| | | | WO | 2018215461 A1 | 29-11-2018 |
| WO 2014207015 | A1 | 31-12-2014 | NONE | | |

EPO FORM P0459

For more details about this annex : see Official Journal of the European Patent Office, No. 12/82